# DEMANDE DE BREVET EUROPEEN

(11) **EP 1 411 704 A1**
(43) Date de publication de la demande: **21.04.2004**
(21) Numéro de dépôt: 03292542.2
(22) Date de dépôt: 14.10.2003
(51) Int. Cl.: H04L 29/06, H04L 12/56

(54) **Dispositif et procédé pour l'établissement de canaux de transmission**

(30) Priorité: 15.10.2002 FR 0212823
(71) Demandeur: ALCATEL, 75008 Paris (FR)
(72) Inventeur: Gass, Raymond, 67150 Bolsenheim (FR); Le Creff, Michel, 95450 Vigny (FR)
(74) Mandataire: Sciaux, Edmond

(57) **Abrégé**

Un dispositif (D) est dédié au traitement de données pour l'établissement de canaux de transmission de données entre des terminaux émetteurs (T1) et des terminaux récepteurs (T3) raccordés à un réseau de communications par des premiers (CM1) et seconds (CM3) moyens de connexion. Ce dispositif comprend des moyens de gestion (MG) couplés au réseau de communications et agencés, à réception d'une demande de transmission de données entre un terminal émetteur (T1) et un terminal récepteur (T3), pour déterminer des données d'information représentatives de l'une au moins des caractéristiques d'émission/réception des seconds moyens de connexion (CM3) du terminal récepteur (T3) et/ou des données d'information représentatives de l'une au moins des caractéristiques d'émission/réception des premiers moyens de connexion (CM1) du terminal émetteur (T1), en vue de la négociation et de l'établissement d'un canal de transmission de données entre les terminaux émetteur et récepteur, adapté à leurs capacités respectives et aux caractéristiques de leurs premiers et seconds moyens de connexion.

## Description

L'invention concerne l'échange de données entre terminaux au sein de réseaux de communications, et plus particulièrement l'établissement de canaux de transmission de données entre terminaux.

L'échange de données entre un terminal dit « émetteur » et un terminal dit « récepteur », via un réseau de communications, nécessite, d'une part, que chacun desdits terminaux soit couplé au réseau par un dispositif de connexion (ou « liaison réseau »), et d'autre part, qu'un canal de transmission de données soit établi entre ces terminaux. Dans de nombreux réseaux, et notamment dans les réseaux à protocole IP (ou Internet), les procédures de négociation et d'établissement des canaux de transmission sont gérées par ce que l'homme de l'art appelle des « gatekeepers », auprès desquels les terminaux sont enregistrés.

On entend ici par « enregistrés », le fait que le gatekeeper connaît les caractéristiques et capacités de transmission des terminaux dont il gère les canaux de transmission.

Actuellement, lorsqu'un gatekeeper reçoit d'un terminal émetteur, enregistré auprès de lui, une demande de transfert de données à destination d'un terminal récepteur, il établit une liaison, généralement via un canal logique de signalisation appartenant au plan de contrôle (ou « plan C »), avec le gatekeeper auprès duquel le terminal récepteur est enregistré. Cette liaison permet aux gatekeepers de s'échanger des données d'information représentatives des caractéristiques et capacités de transmission (en émission comme en réception) des terminaux émetteur et récepteur, et par conséquent de déterminer les caractéristiques du canal de transmission qui sont les mieux adaptées au type de données à transmettre, compte tenu desdites caractéristiques et capacités de ces terminaux.

Ces procédures d'échange de données d'information sont généralement standardisées. Par exemple, l'échange de données multimédia sur IP (ou MoIP pour « Multimedia over IP ») est défini, notamment, par la famille de standards H.323 de l'ITU ou le standard SIP (pour « Session Initiation Protocol » - protocole de contrôle des couches d'application permettant de créer, modifier et clore une session comportant un ou plusieurs participants).

Lorsque les terminaux émetteur et récepteur sont couplés au réseau via des liaisons réseau de capacités importantes, notamment en matière de bande passante, les procédures d'échange standardisées sont tout à fait satisfaisantes. Cependant, il arrive fréquemment que les capacités de transmission de la liaison réseau d'un terminal récepteur et/ou de la liaison réseau d'un terminal émetteur ne soient pas suffisantes pour permettre l'échange de données dans le canal de transmission négocié et établi par leurs gatekeepers, compte tenu des caractéristiques et capacités desdits terminaux. Cela est notamment dû à la grande disparité des matériels qui constituent les liaisons réseau et à leurs bandes passantes qui sont comprises entre 50 Kbits/s, dans le cas d'un modem analogique, et 50 à 100 Mégabits/s, dans le cas d'une liaison Ethernet commutée. A titre d'exemple, un modem ne peut pas supporter un échange de données au standard H.262 lorsque le débit est de 6 Mégabits/s.

Par conséquent, il existe de nombreuses situations dans lesquelles l'échange de données, bien qu'ayant été négocié, ne peut pas se dérouler correctement, voire même se faire.

L'invention a donc pour but de remédier à cet inconvénient.

Elle propose à cet effet un procédé de traitement de données destiné à permettre l'établissement de canaux de transmission de données, entre des terminaux émetteurs et des terminaux récepteurs, adaptés aux liaisons réseau (ou premiers et seconds moyens de connexion, comme par exemple des modems ou des liaisons WLAN ou Bluetooth) par lesquels ils sont raccordés à un réseau de communications.

Ce procédé se caractérise par le fait qu'il consiste, en cas de demande d'établissement d'un canal de transmission de données entre un terminal d'émission et un terminal de réception, à déterminer des données d'information représentatives de l'une au moins des caractéristiques d'émission/réception des seconds moyens de connexion du terminal récepteur et/ou des données d'information représentatives de l'une au moins des caractéristiques d'émission/réception des premiers moyens de connexion du terminal émetteur, afin de permettre la négociation et l'établissement d'un canal de transmission de données entre les terminaux émetteur et récepteur, adapté à leurs capacités respectives et aux caractéristiques de leurs premiers et seconds moyens de connexion (ou liaisons réseau).

Préférentiellement, certaines au moins des données d'information sont représentatives de la bande passante des seconds moyens de connexion du terminal récepteur. De même, il est préférable que certaines au moins des données d'information soient représentatives de la bande passante des premiers moyens de connexion du terminal émetteur.

Par ailleurs, on peut communiquer des données d'information représentatives de caractéristiques d'émission/réception des premiers moyens de connexion sensiblement en même temps que la demande d'établissement de canal de transmission de données, c'est-à-dire avant de procéder à la détermination des données d'information des seconds moyens de connexion. En revanche, lorsque que l'on a commencé par déterminer des données d'information représentatives de caractéristiques d'émission/réception des seconds moyens de connexion, on peut ensuite déterminer des données d'information représentatives de caractéristiques des premiers moyens de connexion.

Selon une autre caractéristique de l'invention, le procédé peut comporter une étape complémentaire dans laquelle, après la détermination des données d'information, on procède à la négociation et à l'établissement du canal de transmission entre les terminaux émetteur et récepteur, au sein du réseau.

L'invention porte également sur un dispositif de traitement de données destiné à permettre l'établissement de canaux de transmission de données entre des terminaux émetteurs et des terminaux récepteurs raccordés à un réseau de communications par des premiers et seconds moyens de connexion.

Ce dispositif de traitement se caractérise par le fait qu'il comprend des moyens de gestion couplés au réseau de communications et capables, lorsqu'ils reçoivent une demande requérant la transmission de données entre un terminal d'émission et un terminal de réception, de déterminer des données d'information représentatives de l'une au moins des caractéristiques d'émission/réception des seconds moyens de connexion du terminal récepteur et/ou des données d'information représentatives de l'une au moins des caractéristiques d'émission/réception des premiers moyens de connexion du terminal émetteur, afin de permettre la négociation et l'établissement d'un canal de transmission de données, entre les terminaux émetteur et récepteur, adapté à leurs capacités respectives et aux caractéristiques de leurs premiers et seconds moyens de connexion.

Préférentiellement, les moyens de gestion sont agencés de manière à déterminer des données d'information représentatives de la bande passante des seconds moyens de connexion. De même, les moyens de gestion sont préférentiellement agencés de manière à déterminer des données d'information représentatives de la bande passante des premiers moyens de connexion.

Par ailleurs, les moyens de gestion peuvent être agencés de manière à recevoir des données d'information représentatives de caractéristiques d'émission/réception des premiers moyens de connexion du terminal émetteur, sensiblement en même temps que la demande d'établissement de canal de transmission de données. Mais en variante, ils peuvent être capables de déterminer de telles données d'information (représentatives de caractéristiques d'émission/réception des premiers moyens de connexion du terminal émetteur) après avoir déterminé les données d'information des seconds moyens de connexion.

En outre, les moyens de gestion sont préférentiellement agencés de manière à communiquer les données d'information à au moins un dispositif de gestion (par exemple un gatekeeper).

Selon encore une autre caractéristique de l'invention, les moyens de gestion sont préférentiellement agencés de manière à déterminer les données d'information via au moins un canal logique de signalisation.

Un tel dispositif de traitement peut par exemple être intégré dans un dispositif de gestion du réseau de communication, tel qu'un gatekeeper, lui-même éventuellement implanté dans un serveur de messagerie ou de courrier électronique, ou dans un serveur ayant la fonctionnalité pare-feu ou proxy.

L'invention peut être mise en oeuvre dans les réseaux publics de communications de type PSTN (ou RTC), PLMN (et notamment GSM, GPRS, UMTS, ou i-Mode) et Internet (IP), ainsi que dans les réseaux privés tels que PABX et les passerelles de communication privées (plus connues sous l'expression anglaise « Residential gateway ») pouvant mettre en oeuvre des accès fixes, et sans fil tels que WLAN et Bluetooth.

Par ailleurs, l'invention est particulièrement bien adaptée à l'échange de données multimédia dans les réseaux de communications précitées et notamment dans les réseaux à protocole IP.

En outre, l'invention s'applique à tout type de liaison réseau (ou premier et second moyens de connexion), et en particulier aux liaisons analogiques, ADSL, 2B+D, 30B+D, radio, Ethernet, WLAN et Bluetooth.

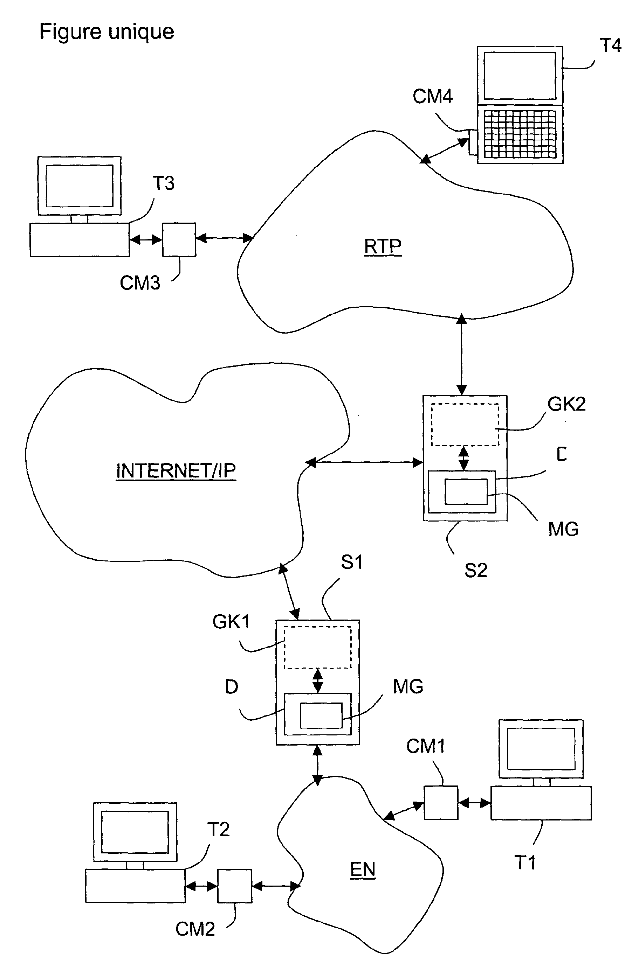

D'autres caractéristiques et avantages de l'invention apparaîtront à l'examen de la description détaillée ci-après, et de l'unique figure annexée qui illustre de façon schématique un exemple d'installation de communications équipée de dispositifs de traitement selon l'invention. Cette figure pourra non seulement servir à compléter l'invention, mais aussi contribuer à sa définition, le cas échéant.

L'invention est destinée à permettre l'établissement de canaux de transmission de données adaptés aux liaisons réseau par lesquelles des terminaux sont raccordés à un réseau de communications.

Dans l'exemple illustré sur l'unique figure, on a représenté une installation de communications comportant un réseau privé EN appartenant par exemple à un groupe d'entreprises et couplé à un réseau public de données de type INTERNET/IP, par l'intermédiaire d'un routeur IP S1 ayant, de préférence, la fonctionnalité proxy ou pare-feu (« firewall »).

Le réseau privé EN est par exemple de type PABX (pour « Private Automatic Branch Exchange »), éventuellement sans fil (s'il utilise la norme DECT). Mais, il pourrait également s'agir d'un réseau de type WLAN (pour « Wireless Local Access Network »).

Une multiplicité de terminaux d'utilisateur Ti (ici i = 1 et 2) sont raccordés au réseau privé EN par l'intermédiaire d'un moyen de connexion CMi, ou liaison réseau, de préférence à haut débit, comme par exemple une liaison Ethernet commutée. Mais, tout autre type de liaison réseau peut être envisagé, et notamment les liaisons analogiques, ADSL, 2B+D, 30B+D, radio, WLAN et Bluetooth.

Par ailleurs, comme illustré sur l'unique figure, l'installation comporte d'autres terminaux d'utilisateurs, comme par exemple des ordinateurs T3 appartenant à des particuliers ou des petites entreprises, qui sont raccordés via une liaison réseau CM3 à un réseau de téléphonie public RTP, par exemple de type PLMN (pour « Public Land Mobile Network »), tels que les réseaux GSM, GPRS, UMTS et i-Mode. Mais, dans une variante, il pourrait s'agir d'un réseau de type commuté (par exemple RTC pour « Réseau Téléphonique Commuté » ou PSTN pour « Public Switched Telephony Network »).

Ce réseau de téléphonie RTP est raccordé au réseau Internet/IP par un serveur d'accès S2.

Par exemple, la liaison réseau CM3 d'un terminal T3 est un modem analogique présentant une bande passante d'environ 50 Kbits/s, ou bien un modem ADSL. Mais, bien entendu, ces autres terminaux d'utilisateurs T3 pourraient être des terminaux mobiles et/ou les liaisons réseau pourraient être de type 2B+D, 30B+D, radio, Ethernet, WLAN ou Bluetooth.

Bien entendu, l'invention est ni limitée à cet exemple de combinaison de réseau privé (EN), de réseau public de téléphonie et de réseau public de données (IP), ni au nombre de réseaux choisi. On pourrait ainsi faire coexister plusieurs réseaux privés, plusieurs réseaux publics de données et plusieurs réseaux publics de téléphonie (par exemple de type PSTN (ou RTC), PLMN (et notamment GSM, GPRS, UMTS ou i-Mode)).

On considère par ailleurs que les terminaux T1, T2 du réseau privé EN sont enregistrés auprès d'un dispositif de gestion GK1, chargé, classiquement, de négocier et d'établir leurs canaux de transmission lorsqu'ils souhaitent transmettre des données à d'autres terminaux, internes (T2, T1) ou externes (T3) audit réseau privé EN. En d'autres termes, le dispositif de gestion GK1 connaît les caractéristiques des terminaux T1 et T2, et notamment leurs capacités de transmission de données (en émission comme en réception). Le dispositif de gestion GK1 est de préférence un « gatekeeper », par exemple implanté dans le routeur IP S1, comme illustré.

On considère en outre que les terminaux externes au réseau privé EN (ici représentés par T3) sont enregistrés auprès d'un autre dispositif de gestion GK2, chargé, classiquement, de négocier et d'établir leurs canaux de transmission lorsqu'ils souhaitent transmettre des données à d'autres terminaux appartenant éventuellement au réseau privé EN. En d'autres termes, le dispositif de gestion GK2 connaît les caractéristiques des terminaux T3, et notamment leurs capacités de transmission de données (en émission comme en réception). Le dispositif de gestion GK2 est de préférence un « gatekeeper », par exemple implanté dans le serveur d'accès S2, comme illustré.

Bien entendu, les dispositifs de gestion pourraient être implantés dans d'autres équipements de réseau que le routeur IP S1 ou le serveur d'accès S2. Ils pourraient, par exemple, être implantés dans des serveurs de messagerie ou de courrier électronique, ou dans des machines dédiées connectées aux terminaux, ou encore dans des boîtiers dédiés raccordables à des serveurs.

Selon l'invention, l'installation comporte également au moins un dispositif de traitement de données D comprenant un module de gestion MG couplé au réseau de communications, ici Internet/IP, et chargé de déterminer, chaque fois qu'il reçoit une demande requérant la transmission de données entre un terminal d'émission et un terminal de réception, des données d'information représentatives de l'une au moins des caractéristiques de transmission (émission/réception) de la liaison réseau CMi du terminal récepteur et/ou de l'une au moins des caractéristiques de transmission (émission/réception) de la liaison réseau CMi du terminal émetteur.

Préférentiellement comme illustré sur l'unique figure, on associe un dispositif de traitement D de l'invention à chaque dispositif de gestion GK. Le dispositif de traitement D peut même être implanté dans le dispositif de gestion GK.

Lorsqu'un terminal émetteur, par exemple T1, souhaite transmettre des données à un terminal récepteur, par exemple T3, il transmet une requête d'établissement de canal de transmission au premier gatekeeper GK1. Ce dernier communique la requête au module de gestion MG qui recherche tout d'abord le gatekeeper auprès duquel le terminal récepteur T2 est enregistré. Dans l'exemple illustré, il s'agit du second gatekeeper GK2, implanté dans le serveur d'accès S2.

Puis, le module de gestion MG ordonne au premier gatekeeper GK1 d'établir une liaison avec le second gatekeeper GK2 afin de déterminer l'une au moins des caractéristiques de transmission de la liaison réseau CM3 utilisée par le terminal récepteur T3. De préférence, on cherche à déterminer la bande passante de cette liaison réseau CM3.

Le premier gatekeeper GK1 établit alors une liaison classique avec le second gatekeeper GK2, comme il l'aurait fait en l'absence de dispositif de traitement D. Cette liaison étant bien connue de l'homme de l'art, et dépendant du type de données devant être échangées entre les terminaux émetteur et récepteur, elle ne sera pas décrite ici. On peut simplement mentionner que la liaison s'effectue dans un canal logique de signalisation, également appelé plan de contrôle ou « plan C », et est habituellement destinée à l'échange de données d'information, représentatives des caractéristiques, notamment de transmission, des terminaux émetteur et récepteur. Par exemple, dans le cas d'un échange de données de type multimédia sur IP (ou MoIP), la liaison répond au standard H.245 de l'ITU.

Le premier gatekeeper GK1 demande alors au second gatekeeper GK2 de déterminer la bande passante de la liaison réseau CM3 du terminal T3 qui est enregistré auprès de lui, et lui fournit dans le même temps les caractéristiques du terminal émetteur T1. Deux cas peuvent ensuite être envisagés.

Dans le premier cas, le second gatekeeper GK2 détient déjà dans sa mémoire les données d'information représentatives de la bande passante de la liaison réseau CM3, car le terminal T3 les lui a précédemment communiquées, par exemple du fait qu'il savait qu'il allait devoir recevoir des données via sa liaison réseau CM3.

Dans le second cas, le second gatekeeper GK2 ne connaît pas les données d'information représentatives de la bande passante de la liaison réseau CM3 du terminal T3. Par conséquent, le second gatekeeper GK2 interroge le terminal récepteur T3, de préférence sur leur canal de signalisation dédié, pour lui demander de les communiquer. Le terminal récepteur T3 lui communique immédiatement ses données d'information, via le réseau RTP, puisqu'il les connaît depuis qu'il s'est initialisé. A réception de ces données d'information, le second gatekeeper GK2 les transmet au premier gatekeeper GK1 avec les données d'information représentatives des caractéristiques du terminal récepteur T3 qu'il détient dans sa mémoire (puisqu'il est enregistré auprès de lui).

Une fois que le premier gatekeeper GK1 est en possession de la bande passante de la liaison réseau CM3 et des caractéristiques des terminaux récepteur T3 et émetteur T1, il ne lui reste plus qu'à connaître la bande passante de la liaison réseau CM1 du terminal émetteur T1. Deux cas peuvent être envisagés.

Dans le premier cas, le premier gatekeeper GK1 détient déjà dans sa mémoire cette information, du fait que le terminal T1 est un poste fixe et qu'il a récemment établit des canaux de transmission pour lui, ou bien du fait que, le terminal émetteur T1 lui a communiqué sa demande de transmission de données accompagnée des données d'information représentatives de la bande passante de sa liaison réseau CM1.

Dans le second cas, le premier gatekeeper GK1 ne connaît pas les données d'information représentatives de la bande passante de la liaison réseau CM1 du terminal T1. Par conséquent, le module de gestion MG ordonne au premier gatekeeper GK1 de déterminer ces données d'information auprès du terminal émetteur T1. Le premier gatekeeper GK1 demande alors au terminal émetteur T1, de préférence sur leur canal de signalisation dédié, de les communiquer. Le terminal émetteur T1 lui communique immédiatement ses données d'information puisqu'il les connaît depuis qu'il s'est initialisé.

Dans un cas comme dans l'autre, une fois que le premier gatekeeper GK1 est en possession de la bande passante de CM1, la procédure d'obtention des données d'information prend fin. Les premier GK1 et second GK2 gatekeepers peuvent alors négocier au niveau du plan C les caractéristiques du canal de transmission le mieux adapté aux caractéristiques des terminaux T1 et T3, compte tenu, d'une part, du type de données à transmettre, et d'autre part, des bandes passantes des liaisons réseau CM1 et CM3. Puis, une fois la négociation terminée, ils demandent au réseau d'établir le canal de transmission négocié au niveau du plan utilisateur (ou « plan U »). Les terminaux T1 et T3 étant alors connectés l'un à l'autre, ils peuvent s'échanger des données d'information pour se configurer au mieux, chacun de leur côté, compte tenu des données qu'ils vont devoir s'échanger. La transmission de données peut alors commencer entre T1 et T3.

Bien entendu, lorsque la négociation au niveau du plan C ne permet pas de définir un canal de transmission adapté, le terminal émetteur en est averti et sa requête est rejetée.

Le même type de procédure survient lorsque le terminal émetteur est un terminal externe au réseau privé EN, comme par exemple le terminal T3. Mais, dans ce cas la procédure d'obtention de données d'information sur les liaisons réseau est gérée par le dispositif de traitement D implanté dans le serveur d'accès S2.

En revanche une procédure sensiblement différente doit être mise en oeuvre lorsque le terminal émetteur appartient au réseau privé EN, mais est raccordé à celui-ci par l'intermédiaire d'un autre réseau, tel que le réseau Internet/IP. C'est notamment le cas du terminal mobile T4 (ici présenté sous la forme d'un ordinateur portable) qui, dans l'exemple illustré sur l'unique figure, est raccordé au réseau Internet/IP par l'intermédiaire de sa liaison réseau CM4.

Dans ce cas, le terminal T4 est enregistré auprès du premier gatekeeper GK1 qui connaît par conséquent ses caractéristiques propres et non celles de sa liaison réseau CM4, qui n'est plus la même que celle qu'il utilise habituellement lorsqu'il est directement raccordé au réseau privé EN.

Le terminal T4 étant enregistré auprès du premier gatekeeper GK1, il lui transmet sa requête de demande d'établissement d'un canal de transmission, via le réseau RTP, le serveur d'accès S2 et le réseau Internet/IP. A réception de cette requête, le premier gatekeeper GK1 la communique au module de gestion MG qui recherche tout d'abord le gatekeeper auprès duquel le terminal récepteur, par exemple T2, est enregistré. Dans l'exemple illustré, il s'agit également du premier gatekeeper GK1.

Le module de gestion MG implanté dans le serveur S1 (ici un routeur IP) ordonne alors au premier gatekeeper GK1 de déterminer l'une au moins des caractéristiques de transmission de la liaison réseau CM4 utilisée par le terminal émetteur T4. De préférence, on cherche à déterminer la bande passante de cette liaison réseau CM4.

Le premier gatekeeper GK1 utilise alors le canal logique de signalisation, dédié habituellement à son échange de signalisation avec le terminal T4, pour lui demander de communiquer la bande passante de sa liaison réseau CM4. Le terminal émetteur T4 lui communique immédiatement ses données d'information puisqu'il les connaît depuis qu'il s'est initialisé.

Bien entendu, on peut envisager que le terminal émetteur T4 fournisse les données représentatives de la bande passante de son lien réseau CM4 sensiblement en même temps que sa requête d'établissement de liaison. Dans ce cas, l'étape de détermination des données d'information n'a pas lieu entre le premier gatekeeper GK1 et le terminal émetteur T4 (elle s'effectue au niveau de la mémoire de GK1).

Le premier gatekeeper GK1 étant alors en possession de la bande passante de la liaison réseau CM4 et des caractéristiques des terminaux récepteur T2 et émetteur T4 (il les détient en effet dans sa mémoire étant donné qu'ils sont tous les deux enregistrés auprès de lui), il ne lui reste plus qu'à déterminer éventuellement la bande passante de la liaison réseau CM2 du terminal récepteur T2. Deux cas peuvent être à nouveau envisagés.

Dans un premier cas, le premier gatekeeper GK1 détient déjà dans sa mémoire cette information, du fait que le terminal T2 est un poste fixe et qu'il a récemment établit des canaux de transmission pour lui.

Dans le second cas, le premier gatekeeper GK1 ne connaît pas les données d'information représentatives de la bande passante de la liaison réseau CM2 du terminal récepteur T2. Par conséquent, le module de gestion MG ordonne au premier gatekeeper GK1 de déterminer ces données d'information auprès du terminal récepteur T2. Le premier gatekeeper GK1 demande alors au terminal récepteur T2, de préférence sur leur canal de signalisation dédié, de les communiquer. Le terminal récepteur T2 lui communique immédiatement ses données d'information puisqu'il les connaît depuis qu'il s'est initialisé.

Dans un cas comme dans l'autre, une fois que le premier gatekeeper GK1 est en possession de la bande passante de CM2, la procédure d'obtention des données d'information prend fin. Etant le seul gatekeeper impliqué, le premier gatekeeper GK1 détermine (au niveau du plan C) les caractéristiques du canal de transmission le mieux adapté aux caractéristiques des terminaux T4 et T1, compte tenu, d'une part, du type de données à transmettre, et d'autre part, des bandes passantes des liaisons réseau CM4 et CM2. Puis, une fois la détermination effectuée, il demande au réseau d'établir le canal de transmission négocié au niveau du plan utilisateur (ou « plan U »). Les terminaux T4 et T2 étant alors connectés l'un à l'autre, ils peuvent s'échanger des données d'information pour se configurer au mieux, chacun de leur côté, compte tenu des données qu'ils veulent s'échanger. La transmission de données peut alors commencer entre T4 et T2.

Bien entendu, lorsque la négociation au niveau du plan C ne permet pas de définir un canal de transmission adapté, le terminal émetteur en est averti et sa requête est rejetée.

Chaque dispositif de traitement D peut être réalisé sous la forme de circuits électroniques (hardware), de modules logiciels ou informatiques (software), ou d'une combinaison de circuits et de logiciels. Par conséquent, le dispositif de traitement D peut être réalisé sous la forme d'un boîtier destiné à être couplé à un gatekeeper d'un réseau, par exemple, ou bien constituer un gatekeeper d'un réseau, par exemple, lorsqu'il intègre la fonction de négociation et d'établissement des canaux de transmission et pas seulement la fonction d'extraction de caractéristiques de liaisons réseau.

L'invention offre également un procédé de traitement de données destiné à permettre l'établissement de canaux de transmission de données, entre des terminaux émetteurs et des terminaux récepteurs, adaptés aux liaisons réseau par lesquels ils sont raccordés à un réseau de communications.

Celui-ci peut être mis en oeuvre à l'aide du dispositif de traitement D présenté ci-avant. Les fonctions et sous-fonctions principales et optionnelles assurées par les étapes de ce procédé étant sensiblement identiques à celles assurées par les différents moyens constituant le dispositif de traitement D, seules seront résumées ci-après les étapes mettant en oeuvre les fonctions principales du procédé selon l'invention.

Ce procédé consiste, chaque fois que l'établissement d'un canal de transmission de données est requis entre un terminal d'émission et un terminal de réception, à déterminer des données d'information représentatives de l'une au moins des caractéristiques d'émission/réception de la liaison réseau du terminal récepteur et/ou des données d'information représentatives de l'une au moins des caractéristiques d'émission/réception de la liaison réseau du terminal émetteur, afin de permettre la négociation et l'établissement d'un canal de transmission de données entre les terminaux émetteur et récepteur, adapté à leurs capacités respectives et aux caractéristiques de leurs liaisons réseau respectives, compte tenu du type de données à transmettre.

L'invention ne se limite pas aux modes de réalisation de procédé, dispositif de gestion GK et dispositif de traitement D décrits ci-avant, seulement à titre d'exemple, mais elle englobe toutes les variantes que pourra envisager l'homme de l'art dans le cadre des revendications ci-après.

Ainsi, dans ce qui précède il a été fait référence à une installation de communications comportant un réseau privé appartenant à une entreprise ou à un groupe d'entreprises et couplé à un réseau public de type Internet/IP, lui même couplé à un réseau public de téléphonie. Mais, l'invention concerne également les installations qui ne comportent qu'un unique réseau, public ou privé, ou plusieurs réseaux publics et/ou privés.

Par ailleurs, on a décrit une application dans laquelle les terminaux émetteurs et récepteurs étaient des ordinateurs fixes ou portables. Mais l'invention concerne d'une manière générale toutes les machines fixes ou portables capables d'échanger des données (de type multimédia, voie, image ou texte) avec un réseau de communications (quel qu'en soit le type), y compris les téléphones mobiles et les assistants personnels numériques (ou PDA).

En outre, on a décrit une installation dans laquelle chaque gatekeeper était associé, par son module de gestion, à un dispositif de traitement de données selon l'invention, au sein d'un serveur ou routeur. Mais, le dispositif de traitement de l'invention peut être implanté dans le dispositif de gestion du gatekeeper, ou dans d'autres équipements de réseau comme par exemple des serveurs de messagerie ou de courrier électronique, ou dans des machines dédiées connectées aux terminaux, ou encore dans des boîtiers dédiés raccordables à des serveurs.

## Revendications

1. Procédé de traitement de données, pour l'établissement de canaux de transmission de données entre des terminaux émetteurs et des terminaux récepteurs raccordés à un réseau de communications par des premiers et seconds moyens de connexion, **caractérisé en ce qu'**il consiste, en cas de demande d'établissement d'un canal de transmission de données entre un terminal émetteur (T1 ;T4) et un terminal récepteur (T3 ;T2), à déterminer des données d'information représentatives de l'une au moins des caractéristiques d'émission/réception des seconds moyens de connexion (CM3 ;CM2) dudit terminal récepteur (T3 ;T2) et/ou des données d'information représentatives de l'une au moins des caractéristiques d'émission/réception des premiers moyens de connexion (CM1 ;CM4) dudit terminal émetteur (T1 ;T4), en vue d'une négociation et d'un établissement d'un canal de transmission de données entre lesdits terminaux émetteur et récepteur, adapté à leurs capacités respectives et aux caractéristiques de leurs premiers et seconds moyens de connexion.

2. Procédé selon la revendication 1, **caractérisé en ce que** certaines desdites données d'information sont représentatives de la bande passante des seconds moyens de connexion (CM3 ;CM2).

3. Procédé selon la revendication 1, **caractérisé en ce que** certaines au moins desdites données d'information sont représentatives de la bande passante des premiers moyens de connexion (CM1 ;CM4).

4. Procédé selon la revendication 1, **caractérisé en ce qu'**avant de procéder à ladite détermination des données d'information des seconds moyens de connexion (CM3 ;CM2), on communique des données d'information représentatives de caractéristiques d'émission/réception des premiers moyens de connexion (CM1 ;CM4) sensiblement avec ladite demande d'établissement de canal de transmission de données.

5. Procédé selon la revendication 1, **caractérisé en ce qu'**après avoir déterminé des données d'information des seconds moyens de connexion (CM3 ;CM2), on détermine des données d'information représentatives de caractéristiques d'émission/réception des premiers moyens de connexion (CM1 ;CM4).

6. Procédé selon la revendication 1, **caractérisé en ce qu'**après ladite détermination des données d'information on procède à la négociation et à l'établissement dudit canal de transmission entre lesdits terminaux émetteur (T1 ;T4) et récepteur (T3 ;T2).

7. Dispositif de traitement de données (D), pour l'établissement de canaux de transmission de données entre des terminaux émetteurs (T1 ;T4) et des terminaux récepteurs (T3 ;T2) raccordés à un réseau de communications par des premiers (CM1 ;CM4) et seconds (CM3 ;CM2) moyens de connexion, **caractérisé en ce qu'**il comprend des moyens de gestion (MG) couplés audit réseau de communications et agencés, à réception d'une demande de transmission de données entre un terminal émetteur (T1 ;T4) et un terminal récepteur (T3 ;T2), pour déterminer des données d'information représentatives de l'une au moins des caractéristiques d'émission/réception des seconds moyens de connexion (CM3 ;CM2) dudit terminal récepteur (T3 ;T2) et/ou des données d'information représentatives de l'une au moins des caractéristiques d'émission/réception des premiers moyens de connexion (CM1 ;CM4) dudit terminal émetteur (T1 ;T4), en vue d'une négociation et d'un établissement d'un canal de transmission de données entre lesdits terminaux émetteur et récepteur, adapté à leurs capacités respectives et aux caractéristiques de leurs premiers et seconds moyens de connexion.

8. Dispositif selon la revendication 7, **caractérisé en ce que** lesdits moyens de gestion (MG) sont agencés pour déterminer des données d'information représentatives de la bande passante des seconds moyens de connexion (CM3 ;CM2).

9. Dispositif selon la revendication 7, **caractérisé en ce que** certaines au moins desdites données d'information sont représentatives de la bande passante des premiers moyens de connexion (CM1 ;CM4).

10. Dispositif selon la revendication 7, **caractérisé en ce que** lesdits moyens de gestion (MG) sont agencés pour recevoir des données d'information représentatives de caractéristiques d'émission/réception des premiers moyens de connexion (CM1 ;CM4) dudit terminal émetteur (T1 ;T4), sensiblement en même temps que ladite demande d'établissement de canal de transmission de données.

11. Dispositif selon la revendication 7, **caractérisé en ce que** lesdits moyens de gestion (MG) sont agencés, après ladite détermination des données d'information des seconds moyens de connexion (CM3 ;CM2), pour déterminer des données d'information des premiers moyens de connexion (CM1 ;CM4) dudit terminal émetteur (T1 ;T4).

12. Dispositif selon la revendication 7, **caractérisé en ce que** lesdits moyens de gestion (MG) sont agencés pour communiquer lesdites données d'information à au moins un dispositif de gestion (GK) auprès duquel est enregistré au moins ledit terminal émetteur (T1 ;T4) et chargé de négocier et d'établir ledit canal de transmission de données entre lesdits terminaux émetteur (T1 ;T4) et récepteur (T3 ;T2), au sein dudit réseau.

13. Dispositif selon la revendication 7, **caractérisé en ce que** lesdits moyens de gestion (MG) sont agencés pour déterminer lesdites données d'information via au moins un canal logique de signalisation.

14. Dispositif de gestion (GK) d'un réseau de communication, **caractérisé en ce qu'**il comprend un dispositif de traitement (MG) de données selon l'une des revendications 7 à 13.

15. Dispositif de gestion (GK) selon la revendication 14, **caractérisé en ce qu'**il est agencé sous la forme d'un serveur choisi dans un groupe comprenant au moins les serveurs de messagerie, les serveurs de courrier électronique, les serveurs de type pare-feu et les serveurs de type proxy.
